# EUROPEAN PATENT SPECIFICATION

(11) **EP 3 134 698 B1**
(45) Date of publication and mention of the grant of the patent: **09.01.2019**
(21) Application number: 15730535.0
(22) Date of filing: 12.05.2015
(51) Int. Cl.: F28D 20/00

(54) **THERMAL ENERGY STORAGE FACILITY**
WÄRMEENERGIESPEICHERANLAGE
INSTALLATION D'ACCUMULATION D'ÉNERGIE THERMIQUE

(30) Priority: 16.05.2014 ZA 201403555
(43) Date of publication of application: 01.03.2017
(73) Proprietor: Stellenbosch University, 7600 Western Cape Province (ZA)
(72) Inventor: GAUCHÉ, Paul, Stellenbosch 7600 (ZA); LOUW, André Du Randt, Worcester 6850 Western Cape (ZA)
(74) Representative: Tostmann, Holger Carl
(86) International application number: PCT/IB2015/053471
(87) International publication number: WO 2015/173721

(56) References cited:
- DE-A1- 4 206 695
- FR-A1- 2 292 199
- US-A- 4 362 149

## Description

### FIELD OF THE INVENTION

This invention relates to thermal energy storage. More particularly, the invention relates to a thermal energy storage facility wherein energy absorbing material is provided by a packed bed. DE 4206695 A1 discloses a thermal energy storage facility having the features in the preamble of claim 1.

### BACKGROUND TO THE INVENTION

The generation of power from sources using conventional fossil fuels is increasingly being replaced by the use of renewable energy of one or other type. As far as the present patent application is concerned, the invention is especially appropriate for use in association with concentrating solar power plants or combined cycle power plants, although it is not limited to these applications.

The use of solar energy is associated with the need for storing the energy collected for use at a later time so that energy is available at night time or when the sun is obscured, typically by cloud. One practical way of storing energy is in the form of heat (thermal energy) that can be used subsequently for the generation of electricity, by way of a steam generating cycle and an associated turbine and generator.

Different thermal energy storage facilities have been proposed and are currently in use, at least to some extent. These include the storage of thermal energy in molten salts or alternatively, primarily as latent heat in the case of phase change materials. Although these are successful to a greater or lesser extent, there is considerable scope for improvement, particularly as regards reduction of cost.

Packed rock beds are also used for thermal energy storage at high temperatures. A pile of rocks is typically housed in a substantially sealed enclosure and used to absorb thermal energy from a heat transfer fluid in order to discharge the thermal energy at a later stage. The heat transfer fluid typically enters the sealed enclosure though a suitable inlet and heats the pile of rocks contained in the enclosure from the outside thereof during a charge cycle. During a discharge cycle, the cooling of the rock bed results in heat transfer fluid passing through the rock bed and exiting by way of the outside of the rock bed and then through the enclosure to an outlet therefrom.

In instances in which the rock bed is located within a container, a problem referred to as "the ratcheting effect" may occur. An increase in the temperature of particles in rocks constituting the rock bed leads to expansion, which in turn may cause some rocks to be urged against other rocks or walls of the container if the thermal expansion coefficient of the packed bed is greater than that of the container. Upon discharge, the temperature is reduced and the particles and container contract. If, however, the thermal expansion coefficient of the container is greater than that of the particles, the particles will settle during the charging process and upon discharge the container will contract more than the particles. In this way, the particles are constrained by the container and are subjected to stress, thereby being reduced to smaller rock pieces. This may damage walls of the container and/or lead to a top region of the rock bed being gradually lowered to an unsatisfactory extent.

A further problem is that the cost of a sealed enclosure may be substantial, particularly in the case of large energy storage facilities.

The present invention aims to address these and other problems, at least to some extent.

The preceding discussion of the background to the invention is intended only to facilitate an understanding of the present invention. It should be appreciated that the discussion is not an acknowledgment or admission that any of the material referred to was part of the common general knowledge in the art as at the priority date of the application.

In this specification that follows, the term "packed bed" will be used to include not only elements made of naturally occurring rock, but also elements made of ceramic material, concrete, mining or industrial by-products and any other elements having appropriate heat capacity and other thermal properties.

### SUMMARY OF THE INVENTION

In accordance with the invention there is provided a thermal energy storage facility comprising the features as defined in claim 1.

Further features of the invention provide for the fluid supply end to be located at or near a top region of the packed bed or, alternatively, underneath the packed bed; for an external surface of the packed bed to be substantially exposed to the environment; or alternatively, for the facility to be provided with one or more protecting structures such as a roof for protecting the packed bed from rain or wind.

Still further features of the invention provide for the duct to be defined by a pipe of substantially rigid material having a heat exchange end region and a fluid supply end opposite the heat exchange end region; for the duct to extend at least partially and generally vertically through a central region of the packed bed with the heat exchange end located within a lower region of the packed bed.

Yet a further feature of the invention provides for the apertures to be provided at a heat exchange region of the duct substantially spanning between about 20% to about 50% of the height of the packed bed from the bottom or near the bottom thereof.

Still further features of the invention provide for the duct to be a hollow, elongate shaft; for the pipe to be manufactured from one or more high temperature alloys; for the pipe to be manufactured substantially from steel, and/or concrete or for the pipe to be constructed of element-filled steel gabion bags; and for the elevated temperature to be in excess of 500 °C and even possibly in excess of 1000 °C.

Still further features of the invention provide for the packed bed to be a pile of elements packed around at least the heat exchange end of the pipe; for the fluid supply end of the pipe to be located at or near the top region of the packed bed in which instance the elements are packed such that the packed bed and pipe together to have a frustum-like shape; alternatively, for the fluid supply end of the pipe to be located beneath the packed bed in which instance for the packed bed may be packed such that the packed bed and pipe together have a generally conical or pyramidal shape and the fluid supply end of the pipe is located underneath the packed bed; or as a further alternative for the packed bed to be in the form of an elongate mound having at least an upper region of triangular or truncated triangular cross-section wherein the heat exchange end region of the duct is located in an inner lower region of the packed bed; for the elements to be packed in a generally undisturbed pile; for the pile of elements to slope downwards at its natural angle of repose; for the angle of repose to range between 25° and 65°, preferably between 34° and 42°; and for the element s to be natural rock selected from granite, gneiss or dolerite.

The size of the facility depends on the required thermal energy storage capacity. The height of the packed bed may be between 1 m and 60 m, and the diameter of the duct may be between 0.2 m and 15m. The packed bed may have a volume of about 1 m³ to about 300000 m³.

The invention extends to a thermal energy storage system comprising a thermal energy source, a thermal energy load in fluid communication with the thermal energy source and a thermal energy storage facility for storing thermal energy produced by the thermal energy source so as to supply the thermal energy load during times in which the thermal energy source may have a reduced output, the thermal energy storage facility including a packed bed having an essentially unconstrained outer region and a duct in fluid communication with the thermal energy source and the thermal energy load, the duct having a heat exchange end region and a fluid supply end opposite the heat exchange end region, characterised in that the heat exchange end region is located within a central lower region of the packed bed, the heat exchange end region permitting heat transfer fluid at an elevated temperature travelling from the thermal energy source into the duct via the fluid supply end to pass from the duct to the packed bed and heat the packed bed during a charge cycle, and permitting heat transfer fluid at an elevated temperature to be drawn from the packed bed into the duct such that it is capable of exiting the duct during a discharge cycle to supply thermal energy to the thermal energy load.

Further features of this aspect of the invention provide for the duct to be defined by a pipe of substantially rigid material having a heat exchange end region and a fluid supply end opposite the heat exchange end region; for the duct to extend at least partially and generally vertically through a central region of the packed bed with the heat exchange end region located within a lower region of the packed bed, the duct having apertures at least at or near the heat exchange end region, the apertures permitting heat transfer fluid at an elevated temperature travelling from the thermal energy source into the duct via the fluid supply end to pass from the duct to the packed bed and heat the packed bed during a charge cycle, and permitting heat transfer fluid at an elevated temperature to be drawn from the packed bed into the duct such that it is capable of exiting the duct during a discharge cycle to supply thermal energy to the thermal energy load. According to one aspect of the invention, the thermal energy source is a concentrating solar power plant, the thermal energy load is a steam turbine, and the heat transfer fluid is a gas.

The system may include a blower or fan for urging heat transfer fluid towards the duct during the charge cycle and/or for urging heat transfer fluid towards the thermal energy load during the discharge cycle.

The invention extends to a method of constructing a thermal energy storage facility comprising the steps of erecting a duct having a heat exchange end region and a fluid supply end opposite the heat exchange end region and packing a packed bed without substantially constraining the packed bed, the packed bed sloping downwards at its natural angle of repose, characterised in that the packed bed is packed around at least the heat exchange end region of the duct.

Further features of this aspect of the invention provide for a step of erecting a duct of substantially rigid material in a generally vertical orientation, the duct having apertures along the heat exchange end region; and for a step of packing a packed bed around at least the heat exchange end region of the pipe so that the packed bed and pipe together form a required shape wherein the heat exchange end region of the duct is located in an inner lower region of the packed bed.

The method may include the step of erecting one or more protecting structures for protecting the packed bed from rain or wind, preferably a roof.

In order for the invention to be more fully understood, implementations thereof will now be described with reference to the accompanying drawings.

### BRIEF DESCRIPTION OF THE DRAWINGS

The invention will now be described, by way of example only, with reference to the accompanying drawings in which:
- Figure 1: is a schematic sectional view illustrating an embodiment of a thermal energy storage facility according to the invention;
- Figure 2: is a schematic sectional view illustrating a second embodiment of a thermal energy storage facility according to the invention;
- Figure 3: is a schematic illustration of an embodiment of thermal energy storage system according to the invention;
- Figure 4A: is an illustration of a simulation output indicating temperature in a thermal energy storage facility according to the invention during a charge cycle;
- Figure 4B: is an illustration of a simulation output indicating temperature in the thermal energy storage facility of Figure 4A near the end of a discharge cycle;
- Figure 5: is a simulation output illustrating discharge temperature over time in a thermal energy storage facility according to the invention;
- Figure 6: is a simulation output illustrating a pressure drop in different regions of a thermal energy storage facility according to the invention;
- Figure 7: is a schematic sectional view illustrating an embodiment of a thermal energy storage facility according to the invention, wherein the facility includes a roof
- Figure 8: is a schematic sectional elevation illustrating an alternative embodiment of thermal energy storage facility according to the invention; and,
- Figure 9: is a cross-sectional view of the embodiment illustrated in Figure 8 taken along line IX - IX.

### DETAILED DESCRIPTION WITH REFERENCE TO THE DRAWINGS

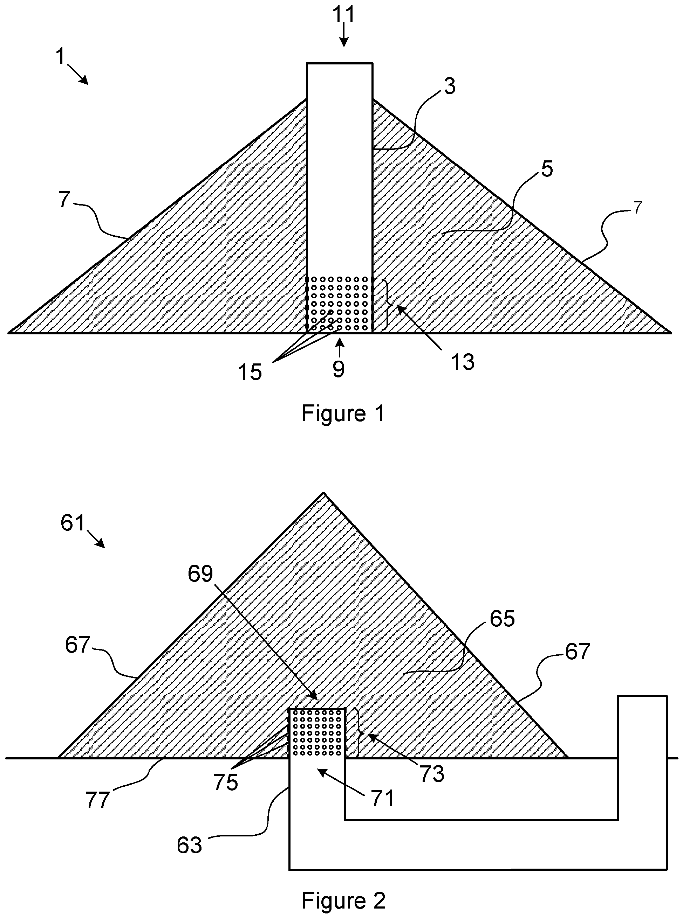

An embodiment of a thermal energy storage facility (1) according to the invention is shown in Figure 1. The thermal energy storage facility (1) comprises a duct defined by a rigid pipe (3) extending generally vertically through a central region of a packed bed (5). The packed bed (5) is packed around the pipe (3) such that its outer region (7) is essentially unconstrained. The pipe (3) has a heat exchange end (9) located within a lower region of the packed bed (5) and a fluid supply end (11) opposite the heat exchange end (9) located at a top region of the packed bed (5).

The fluid supply end (11) is configured to act as an inlet for heat transfer fluid at an elevated temperature travelling into the pipe (3) during a charge cycle, and to act as an outlet for heat transfer fluid at an elevated temperate travelling out of the pipe (3) during a discharge cycle.

The pipe (3) has a heat exchange end region (13) adjacent the heat exchange end (9) along which it is provided with apertures (15). In this embodiment of the invention, the heat exchange end region (13) is a perforated region, in which apertures are defined in the pipe, spanning about a lower quarter of the pipe (3) and thus also about 25% of the height of the packed bed (5). The remainder of the wall of the pipe (3) is substantially continuous or solid, as schematically illustrated in Figure 1.

During a charge cycle, heat transfer fluid passes through the apertures and heat is transferred from the heat transfer fluid to the packed bed (5) in order to store heat in the packed bed (5). This process is reversed during a discharge cycle when heat is transferred from the packed bed (5) to a heat transfer fluid that then flows through the apertures to recover heat stored in the packed bed (5) by absorbing it into the heat transfer fluid.

An external surface of the packed bed (5) may be exposed to the environment and is substantially unimpeded so that the packed bed (5) can expand and contract as it becomes heated and cooled. The packed bed (5) consists of a pile of elements packed around the pipe (3) such that the packed bed (5) and pipe (3) together have a frustum-like shape, as shown in Figure 1.

The facility (1) can be constructed by erecting the pipe (3) or other duct in a generally vertical orientation, and packing the packed bed (5) around the pipe without substantially constraining the packed bed (5). The packed bed (5) may be packed in a generally undisturbed pile, in other words, the pile of elements may be permitted to slope downwards at its natural angle of repose. The natural angle of repose of elements may vary depending on the type and size of the elements used, for example, between 25° and 65°, and is preferably between 34° and 42°. In this embodiment, the type of rock used is a naturally occurring rock that is dolerite having a natural angle of repose of 38°, the height of the packed bed (5) and the pipe (3) is about 50m, and the diameter of the pipe is about 10m.

The thermal energy storage facility (1) is capable of storing thermal energy produced by a thermal energy source so as to supply a thermal energy load during times in which the thermal energy source may have a reduced or no output.

A further embodiment of a thermal energy storage facility (61) according to the invention is shown in Figure 2. The thermal energy storage facility (61) includes a rigid pipe (63), a portion of which extends from the bottom (77) of the packed bed (65) into a central region thereof. The packed bed (65) is packed around the heat exchange end (69) of the pipe (63) such that the outer region (67) is essentially unconstrained and such that the packed bed and pipe together have a generally conical or pyramidal shape. The heat exchange end (69) and heat exchange end region (73) which includes apertures (75) is located in a bottom region of the packed bed (65) and a fluid supply end (71) opposite the heat exchange end (69) is located underneath the packed bed (65). In this embodiment, the fluid supply end (71) of the pipe (63), located underneath the packed bed, extends through a bottom support or the ground on which the packed bed (65) rests so as to protrude into a central lower region of the packed bed (65). The heat exchange end region (73) is a perforated region, in which apertures are defined in the pipe, spanning about 25% of the height of the packed bed (65). The remainder of the wall of the pipe (63) extending below the support or ground is substantially continuous.

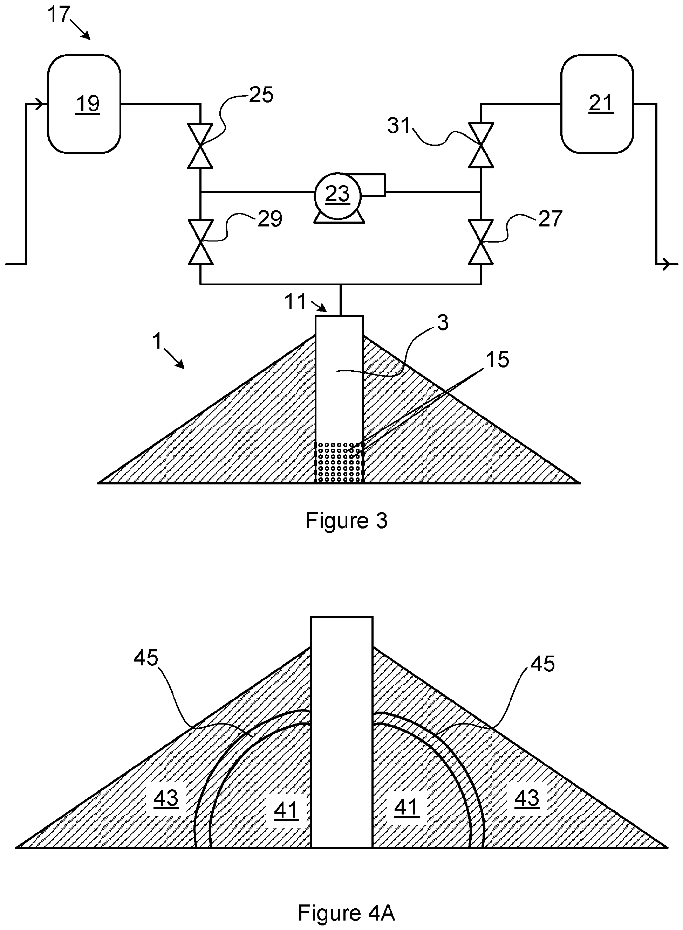

Figure 3 illustrates an embodiment of a thermal energy storage system (17) in which the thermal energy storage facility (1) as described with reference to Figure 1 is in fluid communication with a thermal energy source (19) and a thermal energy load (21). In this embodiment, the thermal energy source (19) is a concentrating solar power plant and the thermal energy load (21) is a steam turbine.

The system (17) further includes a blower (23) or fan, a first charge cycle valve (25), a second charge cycle valve (27), a first discharge cycle valve (29), and a second discharge cycle valve (31). The blower (23) is in fluid communication with the thermal energy source (19), the thermal energy load (21) and the thermal energy storage facility (1), and is configured to urge heat transfer fluid into the pipe (3) of the thermal energy storage facility (1) during a charge cycle and to urge heat transfer fluid towards the thermal energy load (21) during the discharge cycle. In this embodiment, the heat transfer fluid is air which is heated to a temperature in the region of 500°C to 650°C.

In other embodiments of the invention, the heat transfer fluid may be heated to temperatures in excess of 500 °C or even 1000 °C.

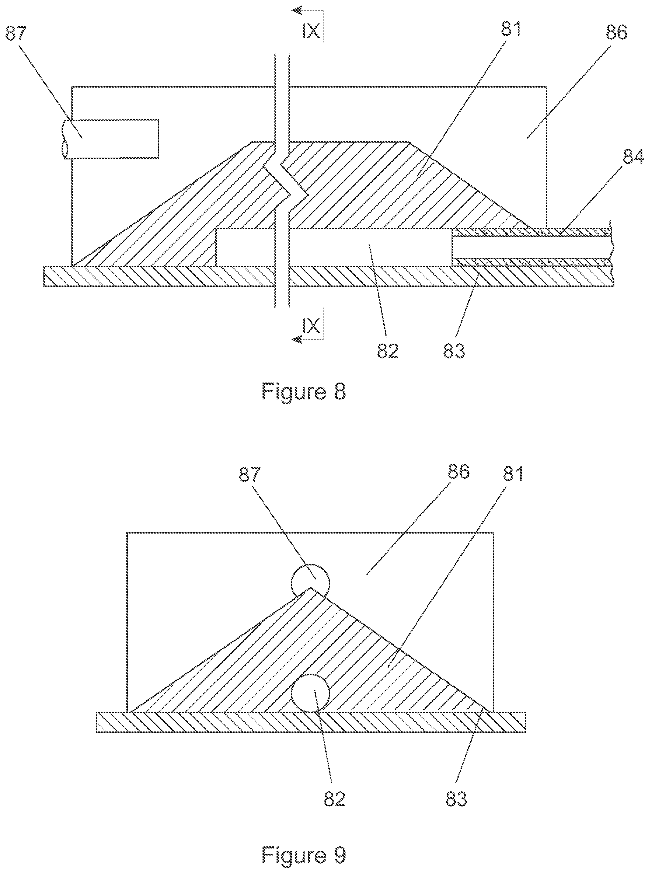

Numerous different arrangements are possible within the scope of the invention and, as illustrated in Figures 8 and 9, the packed bed (81) may assume the form of an elongate mound generally having a triangular or truncated triangular shape in cross-section, as shown in Figure 9. Also, in such an instance, the inlet pipe (82) may be located on, or somewhat above, the surface (83) on which the packed bed is supported in which instance the inlet region (84) would be heat insulated in order to retain the heat within the heat transfer fluid flowing either into the inner region of the packed bed during a charging cycle or out of it during a discharge cycle. As in the instances described above, the packed bed could be enclosed in a rain and wind protective enclosure (86) having an outlet/inlet (87) for heat transfer fluid flowing out of the enclosure during a charging cycle and into the enclosure during a discharge cycle.

In use, during a charge cycle, the first and second charge cycle valves (25, 27) are open to permit heat transfer fluid at an elevated temperature to enter the pipe (3) via the fluid supply end (11). The first discharge cycle valves (29) must be closed such there is no fluid communication to the thermal energy load (21) and the second discharge valve (31) may be open or closed depending on the demand or otherwise of the thermal energy load (21). The apertures (15) in the pipe (3) permit heat transfer fluid in the pipe (3) to pass from the pipe (3) to the packed bed (5) and heat the packed bed (5). In this way, thermal energy from the thermal energy source (19) is absorbed by the packed bed (5) in an inner region thereof.

It should be appreciated that the second discharge cycle valve (31) may typically be left open during the charge cycle to permit a portion of heat transfer fluid at an elevated temperature to flow directly to the thermal energy load (21), bypassing the thermal energy storage facility (1).

During a discharge cycle, both the first and second discharge cycle valves (29, 31) are open. Heat transfer fluid at an elevated temperature is drawn through the packed bed (5) into the pipe (3) via the apertures (15) and the open valves (29, 31) permit the heat transfer fluid to exit the pipe (3) via the fluid supply end (11) and supply thermal energy to the thermal energy load (21). The first and second charge cycle valves (25, 27) are closed during a discharge cycle so that there is no fluid communication between the thermal energy source (19) and the packed bed.

A numerical model of a thermal energy storage facility according to the invention was created and simulated using ANSYS FLUENT, a commercial computational fluid dynamics (CFD) software product.

In this model, the thermal energy source used to charge a packed rock bed was selected as exhaust gas from a gas turbine power cycle. One charge cycle and one discharge cycle was simulated. The duration of the charge cycle was set to 8 hours and the duration of the discharge cycle was set to 30 hours. Parameters used in the simulation are provided in Table 1 below.

**Table 1: Numerical model parameters**

| | |
|---|---|
| Temperature of heat transfer fluid supplied from rock bed | 560 °C |
| Ambient temperature | 25 °C |
| Mass flow rate of heat transfer fluid | 2272kg/s |
| Global porosity of rock bed | 0.44 |
| Rock density (dolerite) | 2819kg/m³ |
| Heat capacity of rock | 839J/kg K |
| Conductivity of rock | 2W/mK |
| Rock bed height | 48.14m |
| Rock pile angle | 38° |
| Rock pile volume | 248231m³ |
| Particle size in rock bed | 0.05m |
| Energy required by load* | 100MWₑ |

| | |
|---|---|
| **Final electrical output power from a steam cycle* | |

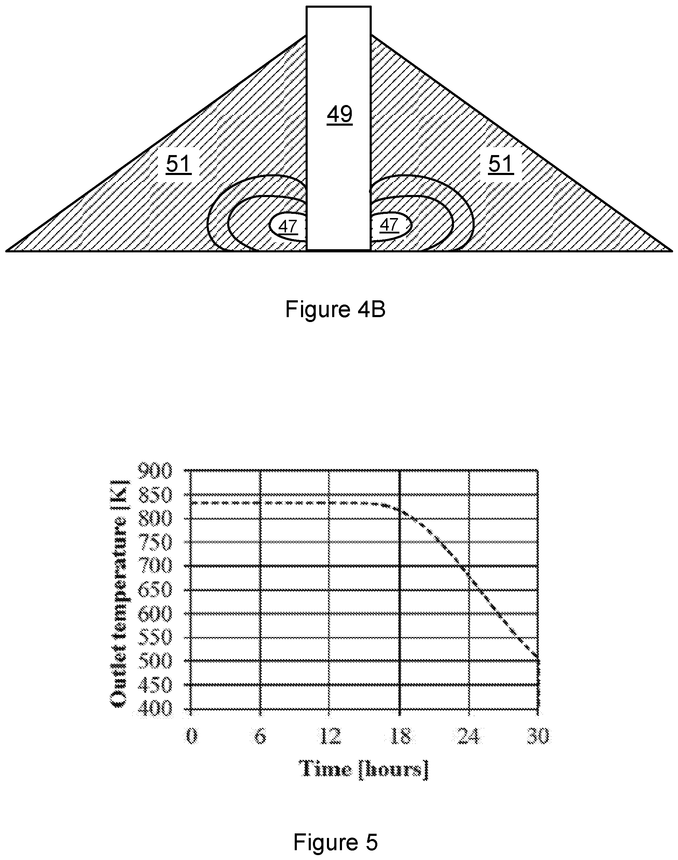

Temperature contours at the end of the charge cycle and the discharge cycle taken along a single plane through the thermal energy storage facility were analysed and illustrations of the simulation results are respectively shown in Figures 4A and 4B.

As illustrated in Figure 4A, a high temperature region (41) forms in an inner region of the rock bed, while a low temperature region (43) remains at the outer region of the rock bed. According to the simulation, the temperature in the high temperature region (41) is about 560°C, while the temperature in the outer region (43) is about 25°C. A thermocline region (45) is present between the high temperature region (41) and the outer region (43), which is a transitional region between hot and cold zones in the rock bed.

Figure 4B illustrates temperature contours near the end of the discharge cycle. Most of the thermal energy is extracted from the rock bed near the end of the 30 hour discharge cycle. The simulation indicated that a relatively small high temperature region (47) of about 560°C is present in the zone where heat exchange between the rock bed and pipe takes place, with lower temperatures existing in the majority of the pipe (49). The majority of the rock bed is at a low temperature (51) of about 25°C.

It is envisaged that, in actual operation, the facility may stop discharging when the outlet temperature falls below a certain temperature or may reduce the flow rate to conserve available energy. Several charge and discharge cycles may be needed before the facility reaches steady state and is able to supply 30 hours of full load storage.

The simulation output of Figure 5 illustrates discharge temperature of the heat transfer fluid over time in the numerical model described above. The temperature of fluid exiting the pipe drops to below 800K (about 530°C) at approximately 19 hours of discharging.

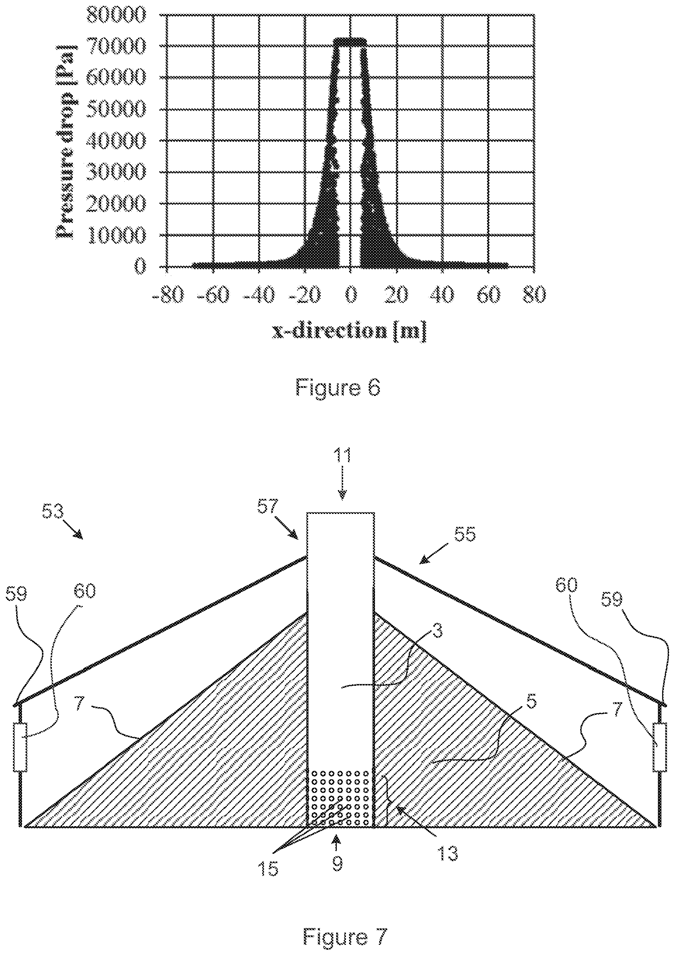

An illustration of a pressure drop along the modelled thermal energy storage facility in a charge cycle is given in Figure 6. The pressure drop is shown along a single plane taken through a central region of the packed bed. The pressure gradient is higher in the region near the heat exchange region provided by the apertures in the pipe, and decreases significantly as fluid flows to the outer regions of the packed bed.

As fluid flows from the central region of the packed bed to the outer regions thereof, the flow area through the packed bed increases and results in lower flow rates. In this way, a lower pressure drop is obtained. It is envisaged that parameters such as the length of the heat exchange region and the radius of the pipe may be adapted to obtain a desired pressure drop. For example, the length of the heat exchange region and the radius of the pipe may both be increased in order to lower the pressure drop. The particle size of the elements in the packed bed may also be altered to obtain a desired pressure drop.

The duct may have any suitable shape and configuration provided that its heat exchange end region is located within a central lower region of the packed bed. The duct may extend vertically through a central region of a packed bed or may enter the packed bed from below a support on which the packed bed rests. Alternatively, the duct may be configured so as to enter the packed bed from a side thereof and extend through the side towards a central lower region within the packed bed provided that the entry part of the duct is adequately insulated to prevent or minimize heat transfer to an outer region of the packed bed.

The duct may be defined by a pipe, which in turn may be any suitable shaft of hollow, elongate form manufactured from a substantially rigid material so as to withstand the heat of the heat transfer fluid and packed bed, and forces applied thereto by the packed bed. The pipe may, for example, be manufactured from a high temperature alloy such as steel or concrete, or from both steel and concrete. Alternatively, the pipe may consist of filled steel gabion bags, preferably element-filled stainless steel gabion bags, stacked so as to form a duct or passageway for the flow of heat transfer fluid therethrough.

The apertures in the heat exchange region of the pipe may span any suitable portion of the pipe and/or any suitable height of the packed bed. The heat exchange region may, for example, span between about 20% to about 50% of a total height of the packed bed.

The heat transfer fluid may be a gas or a liquid. The gas may be air, carbon dioxide, or other non-flammable gas. The liquid may be molten salt, thermal oil, or other heat transfer liquid. Any suitable rock type may be employed, for example but not limited to granite, dolerite or gneiss.

It is envisaged that the thermal energy storage facility or system of the present invention may include a protecting structure or structures which serve to protect the packed bed from rain, wind or other elements. Preferably, the protecting structure prevents rain from reaching the packed bed while not substantially insulating it from the environment such that air is capable of escaping from the packed bed.

An embodiment of a thermal energy storage facility (53) according to the invention is illustrated in Figure 7. The embodiment shown in Figure 7 is similar to the embodiment shown in Figure 1, and like reference numerals represent like components. In this embodiment, the facility (53) further includes a protecting structure in the form of a roof (55). The roof (55) slopes downward from an apex region (57), terminating at eaves (59).

The roof (55) is impermeable to water and thus prevents the packed bed (5) from being exposed to rain. The downward slope causes water to run down the roof (55) and falls from its eaves (59). In this way, rain is prevented from reaching the packed bed (5). The roof (55) is permeable to air to permit air to escape from the packed bed (5).

The roof (55) may, for example, include air vents (60) that are configured not to permit rain or water to flow inwards but allow air to flow through it may be provided. Alternatively, a waterproof and breathable membrane may be employed especially in smaller installations. Polytetrafluoroethylene (PTFE) based materials such as Gore-Tex™ may be used to ensure that the protecting structure is waterproof while allowing air to pass through it.

It is also foreseen that a supporting structure may be provided to support a lower outer region of the packed bed. The supporting structure may, for example, be a wall located around lower outer edges of the packed bed. A support or ground on which the packed bed rests may require foundation treatment to enable it to withstand the elevated temperatures at the central lower region of the packed bed. Similarly, it may require moisture collection monitoring.

The size of the facility depends on the required thermal energy storage capacity. The height of the packed bed may, for example, be between 1 m and 60 m, and the diameter of the pipe may, for example, be between 0.2 m and 15 m. The packed bed may, for example, have a volume of about 1 m³ to about 300 000 m³. The packed bed is preferably sized large enough so that the elements are substantially self-insulating, thereby protecting inner regions of the packed bed against environmental elements such as wind and rain, at least to some degree. Smaller packed beds, such as a packed bed having a volume of 1.0 m³ may also be used.

The dimensions provided above are exemplary and it should be appreciated that the facility may be substantially larger in cases where a higher thermal energy storage capacity is required.

The invention therefore provides a thermal energy storage facility and system and a method of constructing such a facility. The facility disclosed can, in particular, be implemented with concentrating solar power plants or combined cycle power plants, although it is not limited to these applications.

Thermal energy is stored at a central lower region of the packed bed, thereby substantially alleviating the need for further insulation around the packed bed, such as a sealed container. This feature may translate into a significant cost reduction in the construction and maintenance of the thermal energy storage facility.

The inclined, substantially unimpeded sides of the packed bed may overcome the problem of ratcheting experienced when a packed bed is housed in a container, whereby particles expand and contract with heating and cooling, packing together more tightly and exerting a force on the container. The design of the facility may also ensure relatively low pressure drops along a majority of the packed bed.

The thermal energy storage facility can be constructed in a relatively simple manner, for example, by simply erecting the pipe as herein described and packing a pile of elements around the pipe at its natural angle of repose. This may reduce components required as well as construction and/or operating costs in order to make thermal energy storage systems economically viable. For example, it may be easier to replace the packed bed at the end of its lifetime if the packed bed is not contained.

Throughout the specification and claims unless the contents requires otherwise the word 'comprise' or variations such as 'comprises' or 'comprising' will be understood to imply the inclusion of a stated integer or group of integers but not the exclusion of any other integer or group of integers.

## Claims

1. A thermal energy storage facility (1, 61, 53) comprising a packed bed (5, 65, 81) having an essentially unconstrained outer region (7, 67) and a duct (3, 63, 82) communicating with an interior of the packed bed (5, 65, 81) and having an external fluid supply end (11, 71), the thermal energy storage facility being **characterised in that** the duct (3, 63, 82) has a heat exchange end region (13, 73) located within a central lower region of the packed bed (5, 65, 81) and has apertures (15, 75) over the heat exchange end region (13, 73) so as to permit heat transfer fluid at an elevated temperature travelling into the duct (3, 63, 82) via the fluid supply end (11, 71) to pass from the duct (3, 63, 82) to an interior of the packed bed (5, 65, 81) to heat the packed bed (5, 65, 81) from an inner region of the packed bed (5, 65, 81) outwards during a charge cycle, and, during a discharge cycle, permitting heat transfer fluid to be drawn through a charged packed bed (5, 65, 81) into the heat exchange end region (13, 73) of the duct (3, 63, 82) at an elevated temperature such that it exits the fluid supply end (11, 71) of the duct (3, 63, 82) in a heated condition.

2. The thermal energy storage facility as claimed in claim 1, wherein the fluid supply end (11, 71) is located at or near a top region of the packed bed (5, 65) or underneath the packed bed (81), and wherein the heat transfer fluid exits the duct (3, 63, 82) via the fluid supply end (11, 71) during the discharge cycle.

3. The thermal energy storage facility as claimed in claim 1 or 2, wherein an external surface of the packed bed (5, 65, 81) is substantially exposed to the environment.

4. The thermal energy storage facility as claimed in any one of claims 1 to 3, which includes one or more protecting structures (55) for protecting the packed bed (5, 65, 81) from rain or wind.

5. The thermal energy storage facility as claimed in any one of claims 1 to 4, wherein the duct (3) is defined by a pipe of substantially rigid material having a heat exchange end region (13) and a fluid supply end (11) opposite the heat exchange end region (13), the duct (3) extending at least partially and generally vertically through a central region of the packed bed (5) with the heat exchange end region located within a lower region of the packed bed (5).

6. The thermal energy storage facility as claimed in claim 1, wherein the apertures (15, 75) span between about 20% to about 50% of the height of the packed bed (5, 65, 81).

7. The thermal energy storage facility as claimed in claim 5, wherein the duct (3, 63, 82) is manufactured from one or more high temperature alloys, preferably steel, and/or concrete or for the pipe to consist of element-filled steel gabion bags, and for the elevated temperature to be between 500 °C and 1500 °C.

8. The thermal energy storage facility as claimed in any one of the preceding claims wherein the fluid supply end (11) of the duct (3) is located at or near a top region of the packed bed (5) in which instance elements are packed such that the packed bed (5) and duct (3) together have a frustum-like shape.

9. The thermal energy storage facility as claimed in any one of claims 1 to 7 wherein the fluid supply end (71) of the duct (63) is located beneath the packed bed (65) in which instance the packed bed (65) is packed such that the packed bed (65) and duct (63) together have a generally conical or pyramidal shape.

10. The thermal energy storage facility as claimed in any one of claims 1 to 7 wherein the packed bed (81) is in the form of an elongate mound having at least an upper region of triangular or truncated triangular shape in cross-section wherein the heat exchange end region of the duct (82) is located in an inner lower region of the packed bed (81).

11. The thermal energy storage facility as claimed in any one of the preceding claims wherein elements of the packed bed (5, 65, 81) are packed in a generally undisturbed pile, the pile sloping downwards at its natural angle of repose which ranges between 25° and 65°.

12. The thermal energy storage facility as claimed in any one of the preceding claims wherein elements of the packed bed (5, 65, 81) are natural rock in the form of granite, gneiss or dolerite.

13. The thermal energy storage facility as claimed in any one of the preceding claims, including a thermal energy source (19) and a thermal energy load (21) in fluid communication with the thermal energy source (19) and wherein the thermal energy storage facility (1, 61, 53) is for storing thermal energy produced by the thermal energy source so as to supply the thermal energy load (21) during times in which the thermal energy source (19) may have a reduced output.

14. The thermal energy storage facility as claimed in claim 13, wherein the thermal energy source (19) is a concentrating solar power plant and in which a blower (23) or fan is provided for urging heat transfer fluid towards the duct (3, 63, 82) during the charge cycle and/or for urging heat transfer fluid towards the thermal energy load (21) during the discharge cycle.

15. A method of constructing a thermal energy storage facility (1, 61, 53) according to claim 1 comprising the steps of erecting a duct (3, 63, 82) having a heat exchange end region (13, 73) and a fluid supply end (11, 71) opposite the heat exchange end region (13, 73) and packing a packed bed (5, 65, 81) around the duct (3, 63, 82) without substantially constraining the packed bed (5, 65, 81), the packed bed (5, 65, 81) sloping downwards at its natural angle of repose wherein the heat exchange end region (13, 73) of the duct (3, 63, 82) is located in an inner lower region of the packed bed (5, 65, 81).

## Patentansprüche

1. Thermische Energiespeichervorrichtung (1, 61, 53) aufweisend eine Schüttung (5, 65, 81) mit einem im Wesentlichen nicht eingegrenzten äußeren Bereich (7, 67) und einem Kanal (3, 63, 82), welcher mit einem Inneren der Schüttung (5, 65, 81) kommuniziert und ein außen liegendes Fluidversorgungsende (11, 71) aufweist, wobei die thermische Energiespeichervorrichtung **dadurch gekennzeichnet ist, dass** der Kanal (3, 63, 82) einen Wärmetauscherendbereich (13, 73) aufweist, welcher in einem mittigen niedrigeren Bereich der Schüttung (5, 65, 81) angeordnet ist und Öffnungen (15, 75) im Wärmetauscherendbereich (13, 73) aufweist, um zu ermöglichen, dass eine auf eine Temperatur erwärmte Wärmeübertragungsflüssigkeit über das Fluidversorgungsende (11, 71) in den Kanal (3, 63, 82) gelangen kann, um von dem Kanal (3, 63, 82) zu einem Inneren der Schüttung (5, 65, 81) zu gelangen, um die Schüttung (5, 65, 81) von einem inneren Bereich der Schüttung (5, 65, 81) nach außen hin während eines Ladezyklus zu erwärmen, und während eines Entladezyklus zu ermöglichen, dass Wärmeübertragungsflüssigkeit durch eine geladene Schüttung (5, 65, 81) in den Wärmetauscherendbereich (13, 73) des Kanals (3, 63, 82) bei einer erhöhten Temperatur gelangt, sodass es das Fluidversorgungsende (11, 71) des Kanals (3, 63, 82) in einem erhitzten Zustand verlässt.

2. Thermische Energiespeichervorrichtung nach Anspruch 1, wobei das Fluidversorgungsende (11, 71) am oder nahe eines oberen Bereichs der Schüttung (5, 65) oder unterhalb der Schüttung (81) angeordnet ist, und wobei die Wärmeübertragungsflüssigkeit den Kanal (3, 63, 82) über das Fluidversorgungsende (11, 71) während des Entladezyklus verlässt.

3. Thermische Energiespeichervorrichtung nach Anspruch 1 oder 2, wobei eine außenliegende Oberfläche der Schüttung (5, 65, 81) im Wesentlichen der Umgebung ausgesetzt ist.

4. Thermische Energiespeichervorrichtung nach einem der Ansprüche 1 bis 3, welche einen oder mehrere Schutzstrukturen (55) zum Schützen der Schüttung (5, 65, 81) vor Regen oder Wind aufweist.

5. Thermische Energiespeichervorrichtung nach einem der Ansprüche 1 bis 4, wobei der Kanal (3) durch ein Rohr aus einem im Wesentlichen starrem Material definiert ist, welches einen Wärmetauscherendbereich (13) und ein Fluidversorgungsende (11) entgegensetzt zum Wärmetauscherendbereich (13) aufweist, wobei sich der Kanal (3) wenigstens teilweise und im Wesentlichen vertikal durch einen mittigen Bereich der Schüttung (5) erstreckt, wobei der Wärmetauscherendbereich (13) in einem unteren Bereich der Schüttung angeordnet ist.

6. Thermische Energiespeichervorrichtung nach Anspruch 1, wobei sich die Öffnungen (15, 75) über ca. 20 % bis ca. 50 % der Höhe der Schüttung (5, 65, 81) erstrecken.

7. Thermische Energiespeichervorrichtung nach Anspruch 5, wobei der Kanal (3, 63, 82) aus einer oder mehreren Hochtemperaturlegierungen, vorzugsweise Stahl, und/oder Beton hergestellt ist, oder das Rohr aus einem mit Elementen gefüllten Stahlkorb für die erhöhte Temperatur zwischen 500 °C und 1500 °C besteht.

8. Thermische Energiespeichervorrichtung nach einem der vorhergehenden Ansprüche, wobei das Fluidversorgungsende (11) des Kanals (3) am oder nahe eines oberen Bereichs der Schüttung (5) angeordnet ist, wobei die Elemente in diesem Fall gepackt sind, sodass die Schüttung (5) und der Kanal (3) zusammen stumpfförmig sind.

9. Thermische Energiespeichervorrichtung nach einem der Ansprüche 1 bis 7, wobei das Fluidversorgungsende (71) des Kanals (63) unterhalb der Schüttung (65) angeordnet ist, wobei die Schüttung in diesem Fall gepackt ist, sodass die Schüttung (65) und der Kanal (63) zusammen im Wesentlichen konisch oder pyramidenförmig sind.

10. Thermische Energiespeichervorrichtung nach einem der Ansprüche 1 bis 7, wobei die Schüttung (81) die Form einer länglichen Aufschüttung hat, welche wenigstens einen oberen Bereich mit einem Querschnitt in dreieckiger oder dreieckig-stumpfer Form aufweist, wobei der Wärmetauscherendbereich des Kanals (82) in einem inneren unteren Bereich der Schüttung (81) angeordnet ist.

11. Thermische Energiespeichervorrichtung nach einem der vorhergehenden Ansprüche, wobei Elemente der Schüttung (5, 65, 81) in einem im Allgemeinen ununterbrochenem Stapel gepackt sind, wobei der Stapel mit seinem natürlichem Schüttwinkel abfällt, welcher zwischen 25° und 65° beträgt.

12. Thermische Energiespeichervorrichtung nach einem der vorhergehenden Ansprüche, wobei die Elemente der Schüttung (5, 65, 81) Naturstein in der Form von Granit, Gneis oder Dolerit sind.

13. Thermische Energiespeichervorrichtung nach einem der vorhergehenden Ansprüche, aufweisend eine thermische Energiequelle (19) und eine thermische Last (21) in fluidkommunizierender Verbindung mit der thermischen Energiequelle (19) und wobei die Energiespeichervorrichtung (1, 61, 53) zum Speichern von thermischer Energie eingerichtet ist, welche durch die thermische Energiequelle erzeugt wird, um die thermische Last (21) während Zeiten, in denen die thermische Energiequelle (19) eine verminderte Leistung hat, zu versorgen.

14. Thermische Energiespeichervorrichtung nach Anspruch 13, wobei die thermische Energiequelle (19) ein solarthermisches Kraftwerk ist und in welchem ein Gebläse (23) oder ein Lüfter zum Treiben von Wärmeübertragungsflüssigkeit zu dem Kanal (3, 63, 82) während eines Ladezyklus und/oder zum Treiben von Wärmeübertragungsflüssigkeit zu der thermischen Last (21) während eines Entladezyklus bereitgestellt wird.

15. Verfahren zum Herstellen einer thermischen Energiespeichervorrichtung (1, 61, 53) nach Anspruch 1 aufweisend die Schritte: Aufstellen eines Kanals (3, 63, 82) mit einem Wärmetauscherendbereich (13, 73) und einem Fluidversorgungsende (11, 71) entgegensetzt zum Wärmetauscherendbereich (13, 73); und Packen einer Schüttung (5, 65, 81) um den Kanal (3, 63, 82) herum ohne die Schüttung (5, 65, 81) wesentlich einzugrenzen, wobei die Schüttung (5, 65, 81) mit ihrem natürlichen Schüttwinkel abfällt, wobei der Wärmetauscherendbereich (13, 73) des Kanals (3, 63, 82) in einem inneren unteren Bereich der Schüttung (5, 65, 81) angeordnet ist.

## Revendications

1. Installation d'accumulation d'énergie thermique (1, 61, 53) comprenant un lit tassé (5, 65, 81) ayant une région extérieure essentiellement non contrainte (7, 67) et un conduit (3, 63, 82) communiquant avec un intérieur du lit tassé (5, 65, 81) et ayant une extrémité d'alimentation en fluide externe (11, 71), l'installation d'accumulation d'énergie thermique étant **caractérisée en ce que** le conduit (3, 63, 82) comporte une région d'extrémité d'échange de chaleur (13, 73) située dans une région inférieure centrale du lit tassé (5, 65, 81) et comporte des ouvertures (15, 75) sur la région d'extrémité d'échange de chaleur (13, 73) de manière à permettre à un fluide de transfert de chaleur à une température élevée se déplaçant dans le conduit (3, 63, 82) via l'extrémité d'alimentation en fluide (11, 71) de passer du conduit (3, 63, 82) à un intérieur du lit tassé (5, 65, 81) pour chauffer le lit tassé (5, 65, 81) depuis une région intérieure du lit tassé (5, 65, 81) vers l'extérieur durant un cycle de charge, et, durant un cycle de décharge, permettant à un fluide de transfert de chaleur d'être aspiré à travers un lit tassé chargé (5, 65, 81) dans la région d'extrémité d'échange de chaleur (13, 73) du conduit (3, 63, 82) à une température élevée de telle sorte qu'il sort de l'extrémité d'alimentation en fluide (11, 71) du conduit (3, 63, 82) dans un état chauffé.

2. Installation d'accumulation d'énergie thermique selon la revendication 1, dans laquelle l'extrémité d'alimentation en fluide (11, 71) est située au niveau ou près d'une région supérieure du lit tassé (5, 65) ou sous le lit tassé (81), et dans laquelle le fluide de transfert de chaleur sort du conduit (3, 63, 82) via l'extrémité d'alimentation en fluide (11, 71) durant le cycle de décharge.

3. Installation d'accumulation d'énergie thermique selon la revendication 1 ou 2, dans laquelle une surface externe du lit tassé (5, 65, 81) est sensiblement exposée à l'environnement.

4. Installation d'accumulation d'énergie thermique selon l'une quelconque des revendications 1 à 3, qui inclut une ou plusieurs structures de protection (55) pour protéger le lit tassé (5, 65, 81) de la pluie ou du vent.

5. Installation d'accumulation d'énergie thermique selon l'une quelconque des revendications 1 à 4, dans laquelle le conduit (3) est défini par un tuyau de matériau sensiblement rigide ayant une région d'extrémité d'échange de chaleur (13) et une extrémité d'alimentation en fluide (11) opposée à la région d'extrémité d'échange de chaleur (13), le conduit (3) s'étendant au moins partiellement et de manière globalement verticale à travers une région centrale du lit tassé (5) avec la région d'extrémité d'échange de chaleur située dans une région inférieure du lit tassé (5).

6. Installation d'accumulation d'énergie thermique selon la revendication 1, dans laquelle les ouvertures (15, 75) s'étalent entre environ 20 % et environ 50 % de la hauteur du lit tassé (5, 65, 81).

7. Installation d'accumulation d'énergie thermique selon la revendication 5, dans laquelle le conduit (3, 63, 82) est fabriqué à partir d'un ou de plusieurs alliages à température élevée, de préférence de l'acier, et/ou du béton, ou pour que le tuyau se compose de sacs de gabion d'acier remplis d'éléments, et pour que la température élevée soit entre 500 °C et 1500 °C.

8. Installation d'accumulation d'énergie thermique selon l'une quelconque des revendications précédentes dans laquelle l'extrémité d'alimentation en fluide (11) du conduit (3) est située au niveau ou près d'une région supérieure du lit tassé (5) auquel cas des éléments sont tassés de telle sorte que le lit tassé (5) et le conduit (3) ont ensemble une forme de tronc.

9. Installation d'accumulation d'énergie thermique selon l'une quelconque des revendications 1 à 7 dans laquelle l'extrémité d'alimentation en fluide (71) du conduit (63) est située sous le lit tassé (65) auquel cas le lit tassé (65) est tassé de telle sorte que le lit tassé (65) et le conduit (63) ont ensemble une forme globalement conique ou pyramidale.

10. Installation d'accumulation d'énergie thermique selon l'une quelconque des revendications 1 à 7 dans laquelle le lit tassé (81) se présente sous la forme d'un monticule allongé ayant au moins une région supérieure de forme triangulaire ou triangulaire tronquée en coupe transversale dans laquelle la région d'extrémité d'échange de chaleur du conduit (82) est située dans une région inférieure intérieure du lit tassé (81).

11. Installation d'accumulation d'énergie thermique selon l'une quelconque des revendications précédentes dans laquelle des éléments du lit tassé (5, 65, 81) sont tassés en une pile globalement non perturbée, la pile s'inclinant vers le bas selon son angle de repos naturel qui est compris dans la plage de 25° à 65°.

12. Installation d'accumulation d'énergie thermique selon l'une quelconque des revendications précédentes dans laquelle des éléments du lit tassé (5, 65, 81) sont de la roche naturelle sous la forme de granite, de gneiss ou de dolérite.

13. Installation d'accumulation d'énergie thermique selon l'une quelconque des revendications précédentes, incluant une source d'énergie thermique (19) et une charge d'énergie thermique (21) en communication fluidique avec la source d'énergie thermique (19) et dans laquelle l'installation d'accumulation d'énergie thermique (1, 61, 53) sert à accumuler l'énergie thermique produite par la source d'énergie thermique de manière à apporter la charge d'énergie thermique (21) durant les moments où la source d'énergie thermique (19) peut avoir une sortie réduite.

14. Installation d'accumulation d'énergie thermique selon la revendication 13, dans laquelle la source d'énergie thermique (19) est une installation d'énergie solaire à concentration et dans laquelle une soufflante (23) ou un ventilateur est prévu pour pousser le fluide de transfert de chaleur vers le conduit (3, 63, 82) durant le cycle de charge et/ou pour pousser le fluide de transfert de chaleur vers la charge d'énergie thermique (21) durant le cycle de décharge.

15. Procédé de construction d'une installation d'accumulation d'énergie thermique (1, 61, 53) selon la revendication 1 comprenant les étapes consistant à ériger un conduit (3, 63, 82) ayant une région d'extrémité d'échange de chaleur (13, 73) et une extrémité d'alimentation en fluide (11, 71) à l'opposé de la région d'extrémité d'échange de chaleur (13, 73) et à tasser un lit tassé (5, 65, 81) autour du conduit (3, 63, 82) sans trop contraindre le lit tassé (5, 65, 81), le lit tassé (5, 65, 81) s'inclinant vers le bas selon son angle de repos naturel dans lequel la région d'extrémité d'échange de chaleur (13, 73) du conduit (3, 63, 82) est située dans une région inférieure intérieure du lit tassé (5, 65, 81) .
